Europäisches Patentamt

European Patent Office

Office européen des brevets

(19)

(11) **EP 1 240 038 B1**

(12) **EUROPÄISCHE PATENTSCHRIFT**

(45) Veröffentlichungstag und Bekanntmachung des Hinweises auf die Patenterteilung:
**08.10.2003  Patentblatt 2003/41**

(21) Anmeldenummer: 00991195.9

(22) Anmeldetag: **14.12.2000**

(51) Int Cl.⁷: **B60C 23/06**

(86) Internationale Anmeldenummer:
**PCT/EP00/12759**

(87) Internationale Veröffentlichungsnummer:
**WO 01/043996 (21.06.2001 Gazette 2001/25)**

(54) **VERFAHREN UND VORRICHTUNG ZUR ERKENNUNG EINES DRUCKVERLUSTES VON REIFEN IN KRAFTFAHRZEUGEN**

METHOD AND DEVICE FOR DETECTING A PRESSURE LOSS IN THE TIRES OF A MOTOR VEHICLE

PROCEDE ET DISPOSITIF PERMETTANT DE DETECTER UNE PERTE DE PRESSION DANS LES PNEUS D'UN VEHICULE A MOTEUR

(84) Benannte Vertragsstaaten:
**DE FR GB IT**

(30) Priorität: **15.12.1999  DE 19960419**
**22.08.2000  DE 10041249**
**11.10.2000  DE 10050198**

(43) Veröffentlichungstag der Anmeldung:
**18.09.2002  Patentblatt 2002/38**

(73) Patentinhaber: **Continental Aktiengesellschaft**
**30165 Hannover (DE)**

(72) Erfinder:
• **LATARNIK, Michael**
**61381 Friedrichsdorf (DE)**
• **GRIESSER, Martin**
**65760 Eschborn (DE)**
• **KÖBE, Andreas**
**64625 Bensheim (DE)**
• **EDLING, Frank**
**65929 Frankfurt (DE)**

(56) Entgegenhaltungen:
**EP-A- 0 441 599          EP-A- 1 065 076**
**WO-A-00/59744          WO-A-01/10658**
**DE-A- 19 721 480**

## Beschreibung

Die Erfindung betrifft ein Verfahren gemäß dem Oberbegriff des Anspruchs 1 und eine Vorrichtung gemäß dem Oberbegriff von Anspruch 10.

Kraftfahrzeuge, die mit einem elektronischen System zur Regelung der Fahrdynamik, wie beispielsweise ABS, ASR oder ESP ausgestattet sind, weisen üblicherweise eine Einrichtung zur Messung der Winkelgeschwindigkeit der Fahrzeugräder auf. Eine Messung der Winkelgeschwindigkeit der Fahrzeugräder kann insbesondere mit Hilfe von aktiven Raddrehzahlsensoren erfolgen. Es ist bereits bekannt, daß sich zur Reifendruckverlusterkennung die Beobachtung einer Änderung in der Winkelgeschwindigkeit der Räder eignet, wobei hierzu einige Systeme die erfaßten Radgeschwindigkeiten zunächst in einem Speicher ablegen und diese zu einem späteren Zeitpunkt auswerten. Gegenüber Systemen, die keine Speicherung der Daten vornehmen, kann vorteilhafterweise aus dem Verlauf der Radgeschwindigkeiten auf die aktuelle Fahrsituationen geschlossen werden, so daß, was für eine ausreichende Genauigkeit der Druckverlusterkennung nötig ist, den Reifendruckverlust überlagernde Schwankungen der Radwinkelgeschwindigkeiten aus den Daten entfernt werden können.

Praktisch allen Reifendruckerkennungssystemen ist gemeinsam, daß dem Erkennungssystem zunächst mitgeteilt werden muß, wann der gewünschte Nenndruck $P_0$ der montierten Räder eingestellt ist. Dieser Ausgangszustand für die Reifendruckerkennung kann dem elektronischen System beispielsweise mittels eines Reset-Schalters, der vom Fahrzeugnutzer gedrückt werden muß, mitgeteilt werden. Tritt nach einer bestimmten Zeit ein Druckverlust an einem oder mehreren Rädern auf, verringert sich der Reifendruck des betreffenden Rades um die Druckdifferenz ÄP. Als Folge des Druckverlustes ändert sich der dynamische Abrollradius des betreffenden Rades in einer vom Reifen abhängigen charakteristischen Weise. Üblicherweise wird bei bekannten Druckverlusterkennungssystemen dann auf einen Druckverlust erkannt, wenn sich der dynamische Abrollradius des betreffenden Rades um einen bestimmten Minimalwert verringert hat.

Obwohl bereits zahlreiche Verfahren zur Erkennung eines Druckverlustes durch Auswertung der Radgeschwindigkeit vorgeschlagen wurden, besteht immer noch Bedarf, die Druckverlusterkennung auf Basis von Raddrehzahlinformationen noch zuverlässiger und genauer durchzuführen. Das Problem bei der Druckverlusterkennung besteht darin, eine Änderung des dynamischen Abrollradius aufgrund eines Druckverlustes von Änderungen des dynamischen Abrollradius zu unterscheiden, die u. a. durch dynamische Fahrsituationen, insbesondere Kurvenfahrt, Beschleunigung, Verzögerung usw., und Fahrbahneffekte (Schlaglöcher, verschiedene Reibwerte) hervorgerufen werden können und in der Regel größer sind, als der Einfluß eines Druckverlustes auf den dynamischen Abrollradius (Störeffekte).

Um eine Druckverlusterkennung mit erhöhter Genauigkeit insbesondere auch bei dynamischen Fahrmanövern zu realisieren ist in der WO 00/59 744 A1 (druckschriftlich nicht vor dem maßgeblichen Prioritätstag zur vorliegenden Anmeldung veröffentlicht, Stand der Technik nach Artikel 54(3) EPÜ) ein Verfahren vorgeschlagen worden, bei dem zusätzliche physikalische Daten, wie beispielsweise Gierrate, Beschleunigung, Bremsenbetätigung, Motormoment usw. in den Erkennungsalgorithmus zur Druckverlusterkennung einbezogen werden, so daß eine Druckverlusterkennung auch während dynamischer Fahrmanöver (Kurvenfahrt, Beschleunigen, Abbremsen usw.) durchführbar ist.

In der DE 197 21 480 A1 ist ein in ein elektronisches Antiblockiersystem (ABS) integriertes Druckverlusterkennungsverfahren beschrieben, bei dem nach Auslösen des Reset-Schalters, wenn der Nenndruck der Räder eingestellt ist, zunächst eine zeitlich begrenzte Lernphase durchlaufen wird, in der ein Mikrocontroller unter Berücksichtigung der Fahrsituation Radwinkelgeschwindigkeiten verfolgt und aus dem zeitlichen Verlauf der aus den Radwinkelgeschwindigkeiten gebildeten Referenzwerte obere und untere Grenzwert ($G_1$ und $G_2$) festlegt. Im Anschluß an die Lernphase beginnt eine Vergleichsphase, in der überprüft wird, ob die aktuell bestimmten Referenzwerte innerhalb des durch die gelernten Grenzwerte definierten Bereichs liegen. Das Verfahren berücksichtigt die aktuelle Fahrsituation, indem während der Lernphase und während der Vergleichsphase Referenzwerte während ungeeigneter, dynamischer Fahrsituationen ausgeschlossen werden.

Aus der dem Oberbegriff des Anspruchs 1 entsprechenden EP 441 599 A2 ist ein Verfahren zum Erkennen eines Druckverlustes von Reifen in einem Kraftfahrzeug während der Fahrt bekannt, das mit zwei verschiedenen Verfahren zur Ermittlung der Winkelgeschwindigkeit der Räder arbeitet. Beide Verfahren zur Bestimmung der Winkelgeschwindigkeiten werden parallel durchgeführt und mit diesem Verfahren kann der Druckverlust überhaupt und das Rad, an dem der Druckverlust auftritt, bestimmt werden.

Bekannte Verfahren sind somit darauf beschränkt, eine Druckverlusterkennung nur während wenig dynamischer Fahrsituationen (z. B. im wesentlichen während einer Geradeausfahrt, in der keine Quer- oder Längsbeschleunigung auf das Fahrzeug wirkt) durchzuführen.

Die vorliegende Erfindung setzt sich zum Ziel, eine Druckverlusterkennung auf Basis von Daten der Raddrehzahl auch während dynamischer Fahrsituationen zur Verfügung zu stellen.

Diese Aufgabe wird erfindungsgemäß gelöst durch ein Verfahren gemäß dem Anspruch 1 und eine Vorrichtung gemäß Anspruch 10.

Die vorliegende Erfindung schlägt ein Verfahren zur Erkennung eines Druckverlusts von Reifen in einem Kraftfahrzeugreifen während der Fahrt vor, welches insbesondere zum Detektieren des Absinkens des Reifendrucks unterhalb eines definierbaren Schwellenwertes (kritischer Reifendruck) geeignet ist.

Die Druckverlusterkennung erfolgt in an sich bekannter Weise durch Auswertung von sensorisch bestimmten Winkelgeschwindigkeiten aller Räder des Kraftfahrzeugs'oder Auswertung von Informationen, die die Winkelgeschwindigkeiten auf Basis von Zeitintervallen angeben.

Erfindungsgemäß umfaßt das Verfahren zur Druckverlusterkennung jedoch zwei oder mehrere Teilverfahren, die jeweils für sich ein getrennt funktionsfähiges Verfahren zum Messen des Drucks in einem Fahrzeugreifen bzw. zum Erkennen eines kritischen Reifendrucks darstellen.

Die Schritte der Teilverfahren werden erfindungsgemäß parallel bzw. quasiparallel ausgeführt.

Die parallel bearbeiteten Teilverfahren können durch einen Mikrorechner abgearbeitete Computerprogramme sein.

Handelt es sich bei den Teilverfahren beispielsweise um Unterprogramme, so können diese Unterprogramme in eine Hauptschleife eines Betriebsprogramms so eingearbeitet sein, so daß sie während der Abarbeitung der Hauptschleife nacheinander aufgerufen werden. Es ist auch möglich, daß die Arbeitszeit eines Mikrorechner, die den Teilverfahren zur Verfügung gestellt wird, zwischen den einzelnen Programmteilen oder nach einem Zeitschema "Interruptgesteuert" aufgeteilt wird. Unter einer quasiparallelen Bearbeitung wird gemäß der Erfindung verstanden, wenn eine der vorstehend beschriebenen Verfahrensweisen vorliegt.

Alle Teilverfahren sind bevorzugt so gestaltet, daß sie nach Erkennung eines Druckverlusts ein Signal beispielsweise über eine Leitung oder aber über ein Datenregister abgeben, welches die Information "Druckverlust" enthält. Selbstverständlich können dabei auch noch zusätzliche Signale, die eine Information.zur Identifikation des Teilverfahrens beinhalten, über diese Leitung oder über ein weiteres Datenregister mitübertragen werden.

Das erfindungsgsmäße Druckbestimmungsverfahren umfaßt zumindest ein erstes Teilverfahren und ein zweites Teilverfahren. Beide Teilverfahren erzeugen aus den Winkelgeschwindigkeiten oder aus Informationen, die die Winkelgeschwindigkeiten auf Basis von Zeitintervallen angeben, eine oder mehrere Referenzgrößen. Die Werte der Referenzgröße werden zweckmäßigerweise daraufhin überprüft ob obere und untere Grenzwerte $G_1$, $G_2$ überschritten werden, wobei das zweite Teilverfahren insbesondere Grenzwerte $^BG_1$, $^BG_2$ besitzt, die einen engeren Bereich definieren, als die Grenzwerte $^AG_1$, $^AG_2$ des ersten Teilverfahrens, so daß $^BG_1 < {}^AG_1$ und $^BG_2 > {}^AG_2$ ist.

Vorzugsweise werden die Schwellenwerte $^AG_1$ und $^AG_2$ im ersten Teilverfahren so gewählt, daß eine Warnung über einen Druckverlust bei etwa einem Restdruck von 1,0 bis 1,4 bar ausgegeben wird. Die Schwellenwerte $^BG_1$ und $^BG_2$ im zweiten Teilverfahren werden bevorzugt so gewählt, daß eine Warnung auf Druckverlust bereits bei etwa einem Restdruck von 1,5 bis 2,0 bar erfolgt.

Das erste Teilverfahren spricht vorzugsweise nur bei einem vergleichsweise hohen Druckverlust an. Dieses Teilverfahren ist daher für Fahrmanöver vorgesehen, die eine hohe Dynamik aufweisen. Der Begriff "dynamisches Fahrmanöver" wird im nachfolgenden Absatz beschrieben. Das zweite Teil verfahren spricht bevorzugt bereits bei einem geringen Druckverlust an und ist aufgrund der höheren Empfindlichkeit nur während Fahrmanövern mit geringerer Dynamik einsetzbar. Das zweite Teilverfahren ist so ausgelegt, daß die Weitermeldung der Information "Druckverlust" bei engen Kurven bzw. starker Beschleunigung unterdrückt wird. Das erste Teilverfahren eignet sich dagegen zur Druckverlusterkennung bereits bei unruhigeren (dynamischen) Fahrmanövern.

Unter dem Begriff "dynamisches Fahrmanöver" wird im Sinne der Erfindung ein Fahrmanöver verstanden, bei dem nur bis zu einem gewissen Mindestmaß ein Einfluß der Fahrbedingung auf den dynamischen Abrollumfang bzw. den dynamischen Abrollradius stattfindet. Dies ist im allgemeinen dann der Fall, wenn auf das Fahrzeug geringe Beschleunigungskräfte, wie Querbeschleunigung Q, Längsbeschleunigung L oder Gierrate Ø, wirken.

Unter dem Begriff "wenig dynamisches Fahrmanöver" wird im Sinne der Erfindung verstanden, wenn kein dynamisches Fahrmanöver, wie oben beschrieben, vorliegt. Dies ist vorzugsweise dann der Fall, wenn Q kleiner oder gleich etwa 0,3 g, L kleiner oder gleich etwa 0,3 g und Ø kleiner oder gleich etwa 7 °/s ist. Liegt mindestens eine der aufgeführten Größen oberhalb der vorstehend angegebenen Grenzwerte, so liegt bevorzugt ein dynamisches Fahrmanöver vor.

In einer bevorzugten Ausführungsform der Erfindung wird zur Druckbestimmung ein erstes Teilverfahren und ein zweites Teilverfahren parallel bzw. quasiparallel ausgeführt, wobei die beiden Teilverfahren sich dadurch unterscheiden, daß das zweite Teilverfahren einen engeren Grenzwertbereich besitzt, als das erste Teilverfahren. Enthalten die Teilverfahren Schritte zur Abfrage bzw. Überwachung von Beschleunigungsdaten, so wird im allgemeinen die Lernphase und/oder die Vergleichsphase bei Überschreiten der Beschleunigungswerte von festgelegten Schwellenwerten abgebrochen, so daß die beiden jeweiligen im Verfahrensdurchlauf aufgenommenen Referenzwerte nicht berücksichtigt werden.

Besonders bevorzugt unterscheidet sich das erste Teilverfahren von dem zweiten Teilverfahren zusätzlich dadurch, daß bei dem ersten Teilverfahren eine Berücksichtigung der bestimmten Referenzwerte nur bei wenig dynamischen Fahrsituationen erfolgt, wogegen eine Berücksichtigung der Referenzwerte bei dem zweiten Teilverfahren auch während dynamischer Fahrmanöver erfolgt. Das heißt, daß während wenig dynamischer Fahrmanöver beide Teilverfahrens gleichzeitig aktiv sind und während dynamischer Fahrmanöver nur das zweite Teilverfahren.

Vorzugsweise wird das zweite Teilverfahren nur so lange ausgeführt, bis mindestens ein Beschleunigungswert umfassend die Längsbeschleunigung und Querbeschleunigung einen Wert aufweist, der kleiner oder gleich etwa 0,15 g ist, wobei g für die Erdbeschleunigung steht bzw. die Gierrate einen Wert von kleiner oder gleich etwa 3 °/s aufweist. Das Ausblenden bzw. das Abschalten eines Teilverfahrens kann entweder dadurch erfolgen, daß der Algorithmus für das Teilverfahren durch das Hauptprogramm in Abhängigkeit von der Fahrsituationen aufgerufen wird oder in einem Teilverfahren selbst eine Überprüfung der Fahrbedingungen vorgenommen wird.

Erfindungsgemäß kommen als geeignete Räder für das Kraftfahrzeug beispielsweise herkömmliche Reifen mit Standardfelge aber auch neuartige Reifen mit Notlaufeigenschaften, insbesondere Runflat-Räder mit Notlauffläche oder Runflat-Reifen mit für den Notlauf verstärkter Seitenwand, zum Einsatz. Besonders bevorzugt werden Runflat-Räder mit einer Notlauffläche, die auf der Felge angeordnet ist, eingesetzt. Zur Erzeugung eines Geschwindigkeitsmusters kann die Lauffläche bzw. die Notlauffläche in einem Runflat-Rad oder - Reifen in der Weise modifiziert sein, daß während der Drehung des Reifens im Pannenlauf während der Fahrt ein definiertes Geschwindigkeitsmuster erzeugt wird.

Ein Runflat-Rad, welches bevorzugt gemäß dem Verfahren der vorliegenden. Erfindung einsetzbar ist, wird in der DE 199 08 701.6 beschrieben. Im Pannenlauf erzeugt die Notlauffläche eine für den Notlaufzustand charakteristische und zur Raddrehzahl proportionale periodische Schwingung.Der Notlaufkörper weist hierzu zweckmäßigerweise Unstetigkeiten, besonders bevorzugt ausgebildet als Kavitäten oder Einbuchtungen, an seinem Abrollumfang auf.
Die Notlauffläche gerät nur dann mit der Innenseite des Reifens in Kontakt, wenn der Reifendruck nicht mehr ausreicht, die auf den Reifen einwirkende Last zu tragen, der Reifen demzufolge in einen nahezu luftlosen Zustand übergegangen ist.

Neben dem ersten und zweiten Teilverfahren können in einer weiteren bevorzugten Ausführungsform auch ein oder mehrere weitere von der Radgeschwindigkeit abhängige Teilverfahren zum Einsatz kommen.

Vorzugsweise wird die Druckbestimmung parallel oder quasiparallel auch mittels eines vierten geschwindigkeitsabhängigen Teilverfahrens, welches ein Geschwindigkeitsmuster des Raddrehzahlverlaufs erkennt, durchgeführt. Das geschwindigkeitsabhängige Teilverfahren erkennt das Geschwindigkeitsmuster, welches durch eine speziell beschaffene Notlauffläche erzeugt wird.

Die vorstehend erwähnte, speziell beschaffene Notlauffläche eines Runflat-Rades, weist auf der Oberfläche vorzugsweise Kavitäten auf, welche während des Abrollens der Notlauffläche auf einer Fahrbahn eine für den Notlaufzustand charakteristische Schwingung erzeugen. Diese Schwingung ist anhand des Geschwindigkeitsverlaufs des Rades erkennbar und somit mittels Raddrehzahlsensoren meßbar.

In einer weiteren bevorzugten Ausführungsform können die parallel bzw. quasiparallel ausgeführten Teilverfahren auch zusätzlich mindestens ein drittes Teilverfahren umfassen, welches im wesentlichen ausschließlich zur Druckverlusterkennung von Reifen mit einer innerhalb des Reifenmantels angeordneten Notlauffläche geeignet ist. Die Besonderheit dieses Teilverfahrens besteht darin, daß ein Druckverlust an einem Anstieg der Winkelgeschwindigkeit bzw. des dynamischen Abrollradius eines oder mehrerer Räder gegenüber einem Ausgangswert des betrachteten Rades nach einem Druckverlust erkannt wird. Hier wird der überraschende Effekt ausgenutzt, daß wenn ein Runflat-Rad bzw.-Reifen mit einer Notlauffläche soviel Druck verloren hat, daß der Reifen im wesentlichen auf der Notlauffläche abrollt, dieser einen Anstieg des dynamischen Abrollradius, also einen detektierbaren Abfall der Radgeschwindigkeit zeigt.

Erfindungsgemäß bevorzugt kann die Erkennung des Anstiegs des dynamischen Abrollradius eines Rades entweder dadurch erfolgen, daß

V1) überprüft wird, ob ein fest vorgegebener oder eingelernter Sollwert durch den gemessenen dynamischen Abrollradius überschritten wird oder
V2) überprüft wird, ob der dynamische Abrollradius ansteigt, nachdem dieser zuvor abgefallen ist.

Das Verfahren V2), welches ganz besonders bevorzugt ist, kann auch ein mit den weiter unten beschriebenen Verfahren Prog A und Prog B kombiniertes Verfahren sein. Beispielsweise läßt sich ein zunächst schwaches Absinken des dynamischen Abrollradius als Folge eines Druckverlusts vor dem Aufsetzen auf einen Notlaufkörper zunächst mit den Verfahren Prog A und Prog B feststellen. Steigt danach der dynamische Abrollradius stark an, so liegt Pannenlauf vor. In diesem Fall ist die Notlauffläche des Reifens mit dem Reifenmantel in Kontakt.

In einer weiteren Ausführungsform wird verfahrehsgemäß auf einen Reifendruckverlust ausschließlich in der Weise erkannt, daß überprüft wird, ob die Winkelgeschwindigkeit bzw. der dynamische Abrollradius des betrachteten Rades um mehr als einen vorgegebenen Schwellenwert angestiegen ist.

Mittels des vorstehend beschriebenen Verfahrens für Runflat-Räder mit Notlauffläche kann - wie auch mittels des Teilverfahrens Prog S - sicher erkannt werden, zu welchem Zeitpunkt ein Kontakt zwischen Notlauffläche und Reifenmantel (Pannenlauf) eingetreten ist. Eine Warnmeldung, die auf dem erfindungsgemäß berücksichtigten Effekt des Anstiegs des dynamischen Abrollradius beruht, ist vergleichsweise sicher und zuverlässig, da es sich nicht um eine Relativmessung, wie bei herkömmlichen Druckverlusterkennungsverfahren handelt. Es ist daher möglich, zusätzliche Signale oder Instruktionen ausgehend von dem Ereignis des Pannenlaufs zu generieren. So kann beispielsweise eine Restlaufstrecke für den Reifen im Pannenlauf angezeigt werden. Vorzugsweise werden daher gemäß der Erfindung Restlaufstrecken für die Reifen im Pannenlauf angezeigt. Die Restlaufstrecken können insbesondere abhängig vom Reifentyp sein.

Erfindungsgemäß bevorzugt ist vorgesehen, daß das erste Teilverfahren bei einem hohen Druckverlust anspricht, daß zweite Teilverfahren bei einem geringeren Druckverlust anspricht und ein drittes und/oder viertes parallel bzw. quasiparallel ausgeführtes Teilverfahren vorgesehen ist, welches anspricht,

- wenn bei einem Runflat-Reifen die Winkelgeschwindigkeit oder der dynamische Abrollradius eines oder mehrerer Räder gegenüber einem Ausgangswert des betrachteten Rades nach einem Druckverlust angestiegen ist und/oder
- wenn bei einem Fahrzeugreifen mit speziell beschaffener Notlauffläche ein Geschwindigkeitsmuster erkannt wird, welches charakteristisch für einen Reifendruckverlust ist.

Vorzugsweise wird das Verfahren gemäß der Erfindung zum Messen des Drucks von Fahrzeugreifen innerhalb eines Verfahrens zur Regelung der Bremskraft und/oder der Fahrdynamik (ABS, ASR, ESP) ausgeführt.

Die Referenzgröße Ref, die in einer bevorzugten Ausführungsform zur Bestimmung eines Druckverlusts verwendet wird, wird bevorzugt gebildet, indem die Summen jeweils zweier die Raddrehzahlen repräsentierender Signale dividiert werden.

Die Ausgänge der Teilverfahren, die eine Informationen über einen Druckverlust enthalten, sind vorzugsweise zu einem gemeinsamen Ausgang ODER-verknüpft. Dieser Ausgang kann beispielsweise mit einer Warnlampe im Armaturenbrett verbunden sein.

Da das erfindungsgemäße Verfahren lediglich Einrichtungen benötigt, die ohnehin in einem üblicherweise eingesetzten ABS, ASR oder ESP System vorhanden sind, läßt sich dieses auf vorteilhafte Weise in ein solches System kostengünstig integrieren.

Die Erfindung betrifft daher auch eine Vorrichtung zum Steuern der Bremskraft und/oder der Fahrdynamik und zur Erkennung eines Druckverlusts von Reifen, welche dadurch gekennzeichnet ist, daß ein Mikrorechner, der mit Raddrehzahlsensoren und gegebenenfalls zusätzliche Fahrdynamiksensoren verbunden ist, ein vorstehend beschriebenes erfindungsgemäßes Verfahren und ein an sich bekanntes Verfahren zur Regelung der Bremskraft und/oder Fahrdynamik bearbeitet.

Nachfolgend wird das erfindungsgemäße Verfahren anhand eines Ausführungsbeispiels und den Figuren näher erläutert.

Es zeigen

     Fig. 1 eine schematische Darstellung der'Teilverfahren zur erfindungsgemäßen Druckverlusterkennung,

     Fig. 2a ein Diagramm mit den zeitlichen Verlauf eines Referenzwertes,

     Fig. 2b ein weiteres Diagramm mit einem zeitlichen Verlauf eines Referenzwertes zuzüglich eingezeichneter Grenzwerte,

     Fig. 3 ein Diagramm mit dem Verlauf des dynamischen Radradius $r_d$ in Abhängigkeit vom Reifendruck P und

     Fig. 4 die schematische Darstellung eines Schnittbilds eines Runflat-Rads mit Notlauffläche auf der Felge.

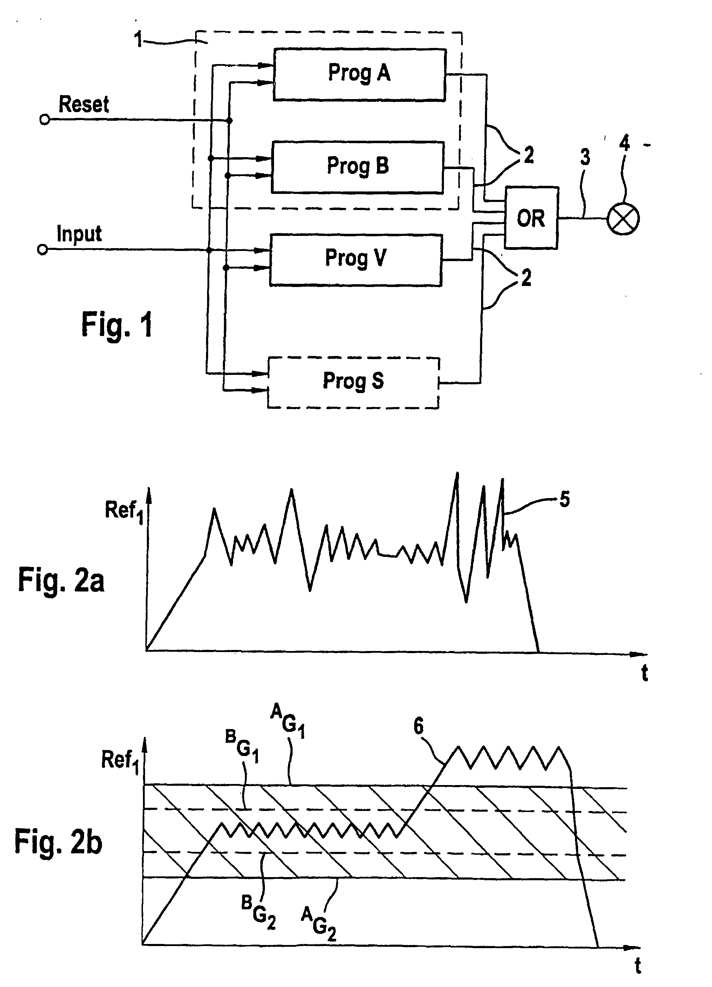

In Fig. 1 ist ein Beispiel für ein Verfahren gemäß der Erfindung mit drei bzw. vier quasiparallel ausgeführten Teilverfahren **Prog A, Prog B, Prog V** bzw. **Prog S** dargestellt. Durch einen Anschluß Reset können die Teilverfahren in einen Ausgangszustand zurückgesetzt werden. Leitung **Input** symbolisiert den Anschluß für die Signale der vier Raddrehzahlsensoren des Kraftfahrzeuges. Die Teilverfahrens besitzen Ausgänge 2, die durch eine Verknüpfungselement **OR** zu einem gemeinsamen Ausgangssignal 3 zusammengefaßt sind. Bei dem Verknüpfungselement **OR** handelt es sich um eine ODER-Verknüpfung. Der Ausgang 3 kann mit einer Warnlampe 4 verbunden sein.

Die in Fig. 1 dargestellte Einheit 1 umfaßt die Teilverfahren **Prog A** und **Prog B**. Mit Einheit 1 läßt sich eine Druckverlusterkennung gemäß der Erfindung bei praktisch allen Reifentypen (Standardreifen, Runflat-Räder) durchführen. Die Teilverfahren **Prog V**, **Prog S** sind insbesondere für Spezialreifen, wie Reifen mit einer Erzeugungseinrichtung für ein Geschwindigkeitsmuster oder Runflat-Reifen geeignet.

Teilverfahren **Prog V** dient zur Erkennung eines Geschwindigkeitsmusters im Raddrehzahlverlauf. Teilverfahren **Prog S** dient zur Erkennung eines Anstiegs des dynamischen Radradius. Beide letztgenannte Teilverfahren stellen wie die Teilverfahren Prog A und Prog B für sich getrennt funktionsfähige Verfahren zum Messen des Drucks in einem Kraftfahrzeugreifen dar.

Wie weiter unten noch im einzelnen beschrieben wird, legt, wie in Fig. 2b dargestellt, Teilverfahren **Prog A** grobe Schwellen, festgelegt durch Werte $^AG_1$ und $^AG_2$, während der Lernphase fest, so daß ein Abschluß der Lernphase vergleichsweise schnell nach dem Rücksetzen durch Drücken der Reset-Taste beim Auffüllen der Reifen auf den Ausgangs-Nenndruck erfolgen kann. Auch wenn nach dem Auffüllen der Reifen ausschließlich so gefahren wird, daß das Fahrzeug sich für eine lange Zeit in dynamischen Fahrzuständen befindet, kann das Lernverfahren bereits nach einer Zeit von vorzugsweise weniger als etwa eine Minute beendet werden.

Im folgenden wird ein Beispiel zur Druckverlusterkennung gemäß der Erfindung in einzelnen Schritten angegeben, welches eine Erweiterung des in der Deutsche Patentanmeldung 197 21 480 AI offenbarten Verfahrens darstellt.

Beschreibung der Verfahrensschritte von **Prog A** (erstes Teil verfahren):

Schritt A1:

Aufnehmen der Winkelgeschwindigkeiten mittels Radsensoren der Räder $w_1$, $w_2$, $w_3$ und $w_4$, wobei mit $w_1$ das rechte Vorderrad, mit $w_2$ das linke Vorderrad, mit $w_3$ das rechte Hinterrad und mit $w_4$ das linke Hinterrad bezeichnet ist. Statt einem Wert für die Winkelgeschwindigkeit w kann auch bevorzugt eine zeitliche Größe T als Maß für die Radgeschwindigkeit verwendet werden, insbesondere kann eine Synchronisation auf eine Sensorflanke erfolgen. Dies bietet den Vorteil einer erhöhten Genauigkeit bei der Bestimmung der Radgeschwindigkeiten.

Schritt A2:

Ermitteln von Vergleichswerten (Lernphase) durch die Schritte A2a bis A2g.

Schritt A2a:

Bildung von Referenzwerten nach der Formel

$$Ref_i = (w_k+w_l)/(w_m+w_n)$$

aus aktuellen Werten von w (bzw. bevorzugt einer Zeit T), die nach dem Verfahren unter Punkt 1 bestimmt wurden, wobei i = 1...3 und die $w_i$ bei jedem Referenzwert unterschiedliche Räder bezeichnen.
In den Figuren 2a und 2b ist ein Beispiel für einen Verlauf von $Ref_1 = (w_k+w_l)/(w_m+w_n)$ in Abhängigkeit von der Zeit **t** dargestellt, wobei k = vorne links, 1 = hinten rechts, m = vorne rechts und n = hinten links sind. Der Verlauf von Kurve **5** oder **6** gibt Aufschluß über Abweichungen des dynamischen Abrollradius bei einem Druckverlust. Würden alle Räder bei Idealbedingungen die gleiche Winkelgeschwindigkeit haben, so betrüge der Wert des Referenzwertes $Ref_1$ = 1. Bei einem Druckverlust weicht der Referenzwert um einen bestimmten Betrag vom Wert 1 ab. Der Verlauf von $Ref_1$ ist allerdings um einen wesentlich größeren Betrag von den aktuellen Fahrbedingungen, wie beispielsweise Fahrbahnbeschaffenheit, Beschleunigung oder Kurvenfahrt abhängig.

Schritt A2b:

Prüfung, ob die Fahrbedingungen bzw. die Fahrsituation in einem zulässigen Bereich liegt. Wenn eine Fahrbedingung vorliegt, die ein Bilden der Referenzwerte als nicht sinnvoll erscheinen läßt, beispielsweise wenn die Längsbeschleunigung, die Querbeschleunigung oder die Radbeschleunigung bestimmte Schwellenwerte überschreitet, so wird das Teilverfahren nicht weitergeführt.

Schritt A2c:

Erzeugung von gefilterten Referenzwerten $\overline{Ref}_i$ z. B. mittels eines Tiefpassfilters 1. Ordnung. Die Tiefpassfilterung läßt sich entweder durch Auswertung von gespeicherten Daten von Referenzwerten durchführen oder mittels eines Rekursionsverfahrens zur Tiefpassfilterung.

Schritt A2d:

Speichern von Ober- und Untergrenzen der gefilterten und ungefilterten Referenzwerte $_iRef^{Max}$ und $_iRef^{Min}$ und Erzeugung eines Mittelwertes $Ref^M$ aus den zurückliegenden Daten bzw. rekursive Erzeugung eines Mittelwertes.

Schritt A2e:

Wiederholen der Schritte A1 bis A2d. solange, bis die Anzahl der ermittelten Referenzwerten einen Wert N (N>1, vorzugsweise N>5) erreicht hat und Überprüfung, ob die Differenz von $_iRef^{Max}$ und $_iRef^{Min}$ einen bestimmten Schwellenwert nicht überschreitet. Ist dieser Schwellenwert überschritten, so wird das Teilverfahren neu begonnen.

Schritt A2f:

Speichern von oberen und unteren Grenzwerten $_iG_1$, $_iG_2$ in Abhängigkeit von den im zurückliegenden Zeitraum ermittelten Referenzwerten (Lernphase) wobei bevorzugt zur Bildung der Grenzwerte ein Offsetwert zum Mittelwert $Ref^M$ hinzuaddiert bzw. subtrahiert wird.
Schritt A2g: Fortsetzung der Programmausführung im Programmteil "Vergleichsphase", welcher unter Punkt 3 beschrieben ist.

Beschreibung der Verfahrensschritte von **Prog B** (zweites Teilverfahren):

Gegenüber dem unter Punkt 2 beschriebenen Verfahren sind die Verfahrensschritte von **Prog A** in **Prog B** auf nachfolgend beschriebene Weise abgewandelt. Daß hier beschriebenen Verfahren entspricht weitgehend dem in der DE 197 21 480 A1 bei der Beschreibung von Fig. 2 angegebenen Verfahren, bei dem ein aktuelles Sample mit einem zu einem früheren Zeitpunkt gespeicherten Sample verglichen wird. Das Verfahren **Prog B**, welches gegenüber **Prog A** einen erheblich höheren Zeitbedarf hat, kann dann zu einer erfolgreichen Ermittlung von Vergleichswerten führen, wenn das Verfahren gegenüber **Prog A** unter Punkt 2 zur Ermittlung von Vergleichswerten aufgrund einer dynamischen Fahrsituation nicht geeignet ist.

Schritt B1:

Aufnahme der Raddrehzahlsignale der einzelnen Räder. Hierbei kann überprüft werden, ob keine Fahrbedingung vorliegt, die ein Bilden der Referenzwerte als nicht sinnvoll erscheinen läßt. Wenn erkannt wurde, daß eine solche Fahrbedingung vorliegt, wird der aktuelle Durchlauf des Verfahrens beendet. Ansonsten erfolgten Übergang zu Schritt B2.

Schritt B2:

Aus den gemessenen Raddrehzahlen wird wenigstens wie weiter oben beschrieben mindestens ein Referenzwert der Referenzwerte $Ref_1$, $Ref_2$, $Ref_3$ gebildet. Auch hier kann, ebenfalls wie weiter oben beschrieben ist, eine Bildung der Referenzwert entweder über Zeitsignale T oder durch Verwendung von Radgeschwindigkeiten erfolgen.

Schritt B3:

Erzeugung eines zusätzlichen Datensatzes aus den ermittelten Referenzwerten durch Tiefpassfilterung. Auch hier kann die Tiefpassfilterung ein rekursives Verfahren sein, welches an einem aktuellen Zeitpunkt nur den zuletzt gefilterte Wert speichert.

Schritt B4:

Überprüfung, ob der aktuell ermittelte gefilterte Referenzwert größer ist, als der bisher ermittelte Maximalwert der ungefilterten Referenzwerte und gegebenenfalls Speicherung des neuen Maximalwertes. Auf analoge Weise wird auch der momentan gültige Minimalwert bestimmt. Zusätzlich kann es zweckmäßig sein, auch aus dem ungefilterten Referenzwerten fortlaufend einen Mittelwert, sowie die dazugehörende Standardabweichung zu ermitteln.

Schritt B5:

Überprüfung, ob bereits eine weitere vorgegebene Zahl N von Referenzwerten ermittelt wurde, d. h. ob ein vollständiges Sample von Referenzwerten aufgenommen wurde.

Ist dies nicht der Fall, wird der aktuelle Durchlauf des Verfahrens beendet. Andernfalls wird das Verfahren fortgesetzt.

Schritt B6:

Überprüfung, ob der Maximalwert der gefilterte Referenzwerte des aktuell aufgenommenen Samples um nicht mehr als einen vorgegebenen Betrag vom Maximalwert der gefilterten Referenzwerte des zuletzt gespeicherten Sample abweicht. Weiterhin wird in diesem Schritt überprüft, ob der Minimalwert der geschilderten Referenzwerten des aktuellen aufgenommenen Sample um nicht mehr als einen vorgegebenen Betrag von der Minimalwert der geschilderten Referenzwerten des zuletzt gespeicherten Sample abweicht. Ansonsten wird das Verfahren wiederholt, bis die Bedingung erfüllt ist.

Schritt B7:

Ggf. Überprüfung, ob der Mittelwert der ungefilterten Referenzwerte des aktuellen Samples um nicht mehr als einen bestimmten Betrag vom Mittelwert der ungefilterten Referenzwerte des zuletzt gespeicherten Samples abweicht. Weiterhin erfolgt, wenn es zweckmäßig ist, eine Überprüfung dahingehend, ob der Mittelwert der ungefilterten Referenzwerte des aktuellen Samples zuzüglich sowie abzüglich eines Mehrfachen des Gütemaßes innerhalb der durch den oberen Grenzwert und den unteren Grenzwert gegebenen Schranken liegt. Dieses Mehrfache kann dabei beispielsweise das Vierfache betragen. Ansonsten wird das Verfahren beendet.

Schritt B8:

Festlegung eines oberen Grenzwerts, indem zum Maximalwert der gefilterten Referenzwerte des aktuellen Samples ein Offsetwert addiert wird. Ein unterer Grenzwert wird festgelegt, indem vom Minimalwert der gefilterten Referenzwerte des aktuellen Samples ein Offsetwert subtrahiert wird.

Ergab eine der Überprüfungen, daß die Abweichungen der Werte bei dem aktuellen Samples zu groß waren, erfolgt ein Übergang zu Schritt B6, indem die entsprechenden Werte des aktuellen Samples (Mittelwert, Standardabweichung der ungefilterten Referenzwerte, Maximalwert und Minimalwert der gefilterten Referenzwerte des aktuellen Samples) zum Vergleich mit künftig aufgenommenen Samples abgespeichert werden.

3. Vergleichsphase

Ermitteln von Referenzwerten gemäß Punkt 2a oder B2 und Berechnung nach einer der Formeln

(Formel A)          $_iG_1$          <          $_i$Ref          <          $_iG_2$

oder

(Formel B)          $_iG_1 < _i$Ref$^{Filt} < _iG_2,$

wobei $_i$Ref$^{Filt}$ auf an sich bekannte Weise gefilterte Referenzwerte sein können. Durch Berechnung nach einer der Formeln A oder B kann nach dem erfindungsgemäßen Verfahren überprüft werden, ob ein Druckverlust aufgetreten ist. Liegt ein Druckverlust vor, wird zweckmäßigerweise eine Information über den Druckverlust des Rades ausgegeben. Werden mehrere Referenzwerte gebildet, kann zweckmäßigerweise durch Betrachtung der Referenzwerte dasjenige Rad individuell identifiziert werden, welches den Druckverlust aufweist.

Beschreibung der Verfahrensschritte von **Prog S** (drittes Teilverfahren):

Das Verfahren **Prog S** dient zur Erkennung eines Geschwindigkeitsmusters eines zur Erzeugung eines Geschwindigkeitsmusters geeigneten Spezial-Rades/Reifens. Eine erfindungsgemäßen einsetzbares Verfahren ist in der Eingangs erwähnten Druckschrift DE 199 08 701.6 beschrieben. Das Rad kann mit einer Notlauffläche ausgerüstet sein, die zur Erzeugung des Geschwindigkeitsmusters modifiziert ist.
Auch bei diesem Verfahren werden die Raddrehzahlsignale der Räder durch das ABS-System detektiert und an die zentrale Recheneinheit weitergeleitet. Die für den Notlaufzustand charakteristische und zur Raddrehzahl proportionale periodische Schwingung wird von einem auf der Felge 12 abgestürzten Notlaufkörper 10 erzeugt. Der Notlaufkörper besitzt an seiner Notlauffläche 13 eine Vielzahl von Einbuchtungen, die gleichmäßig oder ungleichmäßig über den Umfang verteilt sind.

Bei einem plötzlichen Verlust berührt die Notlauffläche die Innenfläche des Mantels, wodurch ein für den Notlaufzustand ausreichend sicherer Fahrbetrieb ermöglicht wird.

Gemäß dem Verfahren werden zunächst die Radgeschwindigkeiten innerhalb definierter Zählzeiten aufgenommen. Mit Hilfe der Einbuchtungen werden für den Notlaufzustand charakteristische separat definierter und zur Raddrehzahl proportionalen periodische Schwingung n-ter Ordnung der Reifenperiode (zum Beispiel n = 13) erzeugt. Werden diese Schwingungen auf den Mittelwert der Raddrehzahl bezogen, so lassen sich Nulldurchgangszeiten des Drehzahl-Ausgangssignales angeben. Bei einem herkömmlichen Reifen sind die Abstände der Nulldurchgangszeiten im wesentlichen Konstant, wogegen bei dem hier eingesetzten Spezial-Reifen sich deutlich merkbare periodische Abweichungen von etwa 0,02 Millisekunden ergeben.

Nach dem in diesem Beispiel angegebenen Verfahren wird der Datensatz aus den Nulldurchgangszeiten in Abhängigkeit von der Zeit durch numerische Fourier-Transformation (FFT) analysiert. Hierdurch wird eine spektrale Leistungsdichte, aufgetragen über die Frequenz, erhalten.

Anhand der nach der Transformation erhaltenen Daten-Kurve mit der spektralen Leistungsdichte über der Frequenz lassen sich zuverlässig Spitzen ermitteln, die durch die Geschwindigkeitsvariation des Spezial-Reifens hervorgerufen sind.

Zur Auswertung der Signale werden dann bestimmte vorgegebene Frequenzbereiche des transformierten Signals aufintegriert. Im Anschluß daran werden die ermittelten Integralwerte mit Referenz- und/oder Schwellenwerten verglichen und bei Überschreitung einer vorgegebenen Differenz zu den Referenzund/oder Schwellenwerten ein Warnsignal an eine im Blickfeld des Fahrers angeordnete Warneinrichtung ausgegeben.

Der Schwellenwert, welcher beim Verfahren **Prog V** zum Einsatz kommt, muß derart groß gewählt werden, daß ein Anstieg der Radgeschwindigkeiten durch Störeinflüsse, wie beispielsweise durch Sonneneinstrahlung auf einen Reifen, sicher ausgeschlossen werden. Geeignete Werte ermittelt der Fachmann durch Fahrversuche. Die Werte hängen empfindlich vom Reifenund Fahrzeugtyp ab.

Beschreibung der Verfahrensschritte von **Prog V** (viertes Teilverfahren):

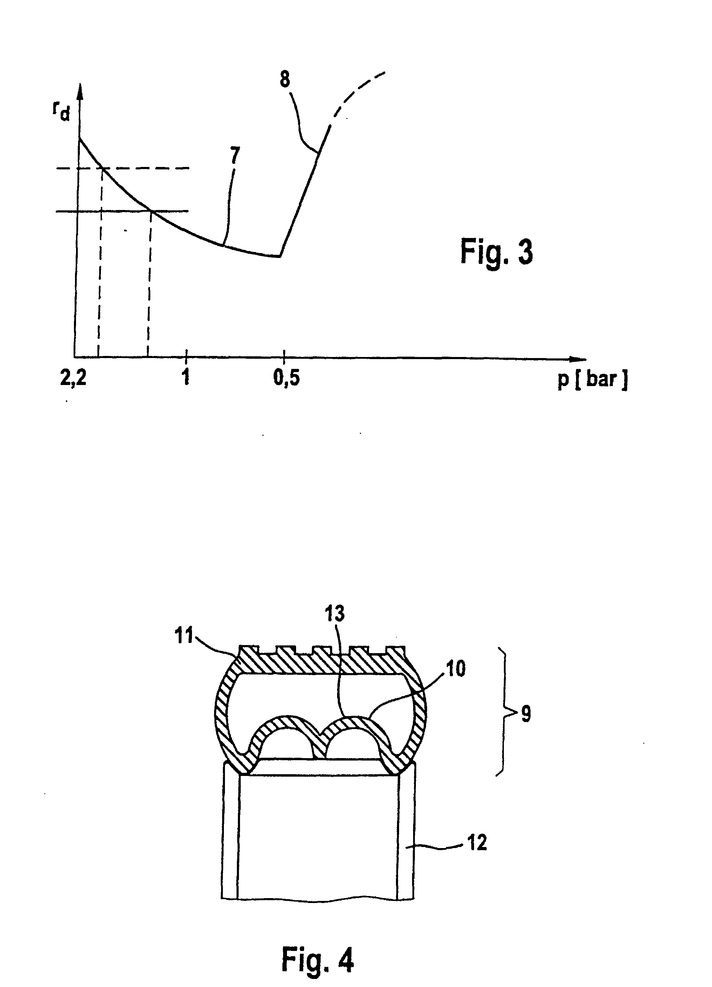

Die Arbeitsweise von **Prog V** wird anhand der Figuren 3 und 4 näher erläutert. Sind auf dem Kraftfahrzeug Runflat-Räder **9** montiert, so sinkt in Abhängigkeit vom Reifendruck der dynamische Abrollradius $r_d$ zunächst wie bei einem gewöhnlichen Reifen ab (Bezugszeichen **7**). Ist der Druckverlust so hoch, daß die in einem Runflat-RRad vorhandene Notlauffläche **10** den Mantel **11** des Reifens berührt, so steigt der dynamische Abrollradius stark an (Bezugszeichen **8**).

Das Verfahren **Prog V** führt eine Überprüfung auf ein Absinken der Umlaufgeschwindigkeit der Räder, welches eine Folge des Anstiegs des dynamischen Abrollradius $r_d$ ist, durch.

Die Methode zur Erkennung in Verfahren **Prog V** kann bei Reifen, die einen deutlichen Effekt zeigen, erheblich unempfindlicher sein, als bei den Verfahren **Prog A** und **Prog B**. Für diese Reifentypen kann es bereits ausreichend sein, die einzelnen Radgeschwindigkeiten beziehungsweise reziproken Radgeschwindigkeiten (Zeitwerte) direkt auf das Überschreiten (Unterschreiten) von fest vorgegebenen reifenabhängigen Grenzwerten zu überwachen. Zweckmäßigerweise müssen diese Grenzwerte nicht in einem Lernverfahren im System eingelernt werden sondern es ist möglich, fest abgelegte Grenzwerte, insbesondere abhängig vom Reifentyp, in einer Datenbank zu speichern.

**Patentansprüche**

1. Verfahren zur Erkennung eines Druckverlustes von Reifen in einem Kraftfahrzeug während der Fahrt, insbesondere zum Detektieren des Absinkens des besagten Drucks unter einen definierbaren Schwellenwert, durch Auswertung von sensorisch bestimmten Winkelgeschwindigkeiten der Räder des Kraftfahrzeugs oder Auswertung von Informationen, die die Winkelgeschwindigkeiten auf Basis von Zeitintervallen angeben, wobei das Druckverlusterkennungsverfahren zwei oder mehrere Teilverfahren (Prog A, Prog B, Prog S, Prog V) umfaßt, die jeweils für sich ein getrennt funktionsfähiges Verfahren zum Messen des Drucks in einem Kraftfahrzeugreifen bzw. zum Detektieren eines kritischen Reifendrucks darstellen, wobei die Schritte der Teilverfahren parallel bzw. quasiparallel ausgeführt werden, und wobei zwei Teilverfahren aus den Winkelgeschwindigkeiten oder Informationen, die die Winkelgeschwindigkeiten auf Basis von Zeitintervallen angeben, eine oder mehrere Referenzgrößen $Ref_1$ erzeugen, und die Referenzgröße /-n daraufhin überprüfen, ob obere und untere Grenzwerte $G_1$ und $G_2$ überschritten werden, **dadurch gekennzeichnet, daß** das zweite Teilverfahren (Prog B) Grenzwerte $^BG_1$ und $^BG_2$ besitzt, die einen engeren Bereich definieren, als die Grenzwerte $^AG_1$ und $^AG_2$ des ersten Teilverfahren (Prog A), so daß $^BG_1 < {}^AG_2$ und $^BG_2 > {}^AG_2$ ist.

2. Verfahren nach Anspruch 1, **dadurch gekennzeichnet, daß** mindestens eines der Teilverfahren ein drittes Teilverfahren (Prog S) ist, welches ein Geschwindigkeitsmuster des Raddrehzahlverlaufs erkennt, das von einem Fahrzeugreifen mit speziell beschaffener Notlauffläche erzeugt wird.

3. Verfahren nach Anspruch 2, **dadurch gekennzeichnet, daß** die Notlauffläche auf der Oberfläche Kavitäten aufweist, welche während des Abrollens auf der Notlauffläche auf einer Fahrbahn eine für den Notlaufzustand charakteristische Schwingung erzeugen, die mittels Raddrehzahlsensoren erkennbar ist.

4. Verfahren nach Anspruch 1, **dadurch gekennzeichnet, daß** mindestens eines der Teilverfahren ein viertes Teilverfahren (Prog V) ist, welches zur Druckverlusterkennung von Runflat-Rädern mit einer innerhalb des Reifenmantels angeordneten Notlauffläche geeignet ist, indem ein Druckverlust daran erkannt wird, daß die Winkelgeschwindigkeit abfällt bzw. der dynamische Abrollradius eines oder mehrerer Räder gegenüber einem Ausgangswert des betrachteten Rades nach einem Druckverlust ansteigt, wenn der Druckverlust so groß ist, daß der Runflat-Reifen im wesentlichen auf der Notlauffläche abrollt.

5. Verfahren nach Anspruch 1, **dadurch gekennzeichnet, daß** ein erstes Teilverfahren (Prog A) mit einem Ansprechen bei hohem Druckverlust, daß ein zweites Teilverfahren (Prog B) mit einem Ansprechen bei geringerem Druckverlust und ein drittes und/oder viertes parallel bzw. quasiparallel ausgeführtes Teilverfahren (Prog S, Prog V) vorgesehen ist, welches anspricht,

   - wenn bei einem Fahrzeugreifen mit einer speziell beschaffenen Notlauffläche ein Geschwindigkeitsmuster erkannt wird, welches charakteristisch für einen Reifendruckverlust ist und/oder
   - wenn bei einem Runflat-Reifen die Winkelgeschwindigkeit oder der dynamische Abrollradius eines oder mehrerer Räder gegenüber einem Ausgangswert des betrachteten Rades nach einem Druckverlust abgefallen ist.

6. Verfahren nach mindestens einem der Ansprüche 1 - 5, **dadurch gekennzeichnet, daß** das Verfahren zum Messen des Drucks von Fahrzeugreifen innerhalb eines Verfahrens zur Regelung der Bremskraft und/oder der Fahrdynamik (ABS, ASR, ESP) ausgeführt wird.

7. Verfahren nach mindestens einem der Ansprüche 1 bis 6, **dadurch gekennzeichnet, daß** die Referenzgröße Ref; gebildet wird, indem die Summen jeweils zweier die Raddrehzahlen repräsentierender Signale dividiert wird.

8. Verfahren nach mindestens einem der Ansprüche 1 bis 7, **dadurch gekennzeichnet, daß** die Ausgänge der Teilverfahren, die eine Information über einen Druckverlust enthalten, zu einem gemeinsamen Ausgang ODER-verknüpft (OR) sind.

9. Verfahren nach Anspruch 4, **dadurch gekennzeichnet, daß** auf Reifendruckverlust erst dann erkannt wird, wenn die Winkelgeschwindigkeit bzw. der dynamische Abrollradius des betrachtetes Rades um mehr als einen vorgegebenen Schwellenwert angestiegen ist.

10. Vorrichtung zum Steuern der Bremskraft und/oder der Fahrdynamik und zur Erkennung eines Druckverlustes von Reifen in einem Kraftfahrzeug, **dadurch gekennzeichnet, daß** ein Mikrorechner, der mit Raddrehzahlsensoren und gegebenenfalls zusätzlichen Fahrdynamiksensoren verbunden ist, ein Verfahren nach wenigstens einem der Ansprüche 1 - 9 und ein an sich bekanntes Verfahren zur Regelung der Bremskraft und/oder Fahrdynamik abarbeitet.

## Claims

1. Method of detecting a pressure loss in tyres of an automotive vehicle during travel, more especially for detecting the drop in said pressure below a definable threshold value, by evaluating sensor-determined angular speeds of the wheels of the automotive vehicle or evaluating information which indicates the angular speeds based on time intervals, the pressure loss detecting method including two or more partial methods (Prog A, Prog B, Prog S, Prog V), which each represent per se a separately operable method of measuring the pressure in an automotive vehicle tyre or respectively detecting a critical tyre pressure, the steps of the partial methods being accomplished in a parallel manner or respectively in a quasi parallel manner, and two partial methods producing one or more reference parameters $Ref_i$ from the angular speeds or information, which indicate or indicates the angular speeds based on time intervals, and checking the reference parameter/parameters to ascertain whether upper and lower limit values $G_1$ and $G_2$ are exceeded, **characterised in that** the second partial method (Prog B) has limit values ${}^BG_1$ and ${}^BG_2$, which define a narrower range than the limit values ${}^AG_1$ and ${}^AG_2$ of the first partial method (Prog A), so that ${}^BG_1$ is $< {}^AG_2$, and ${}^BG_2$ is $> {}^AG_2$.

2. Method according to claim 1, **characterised in that** at least one of the partial methods is a third partial method (Prog S), which detects a speed pattern of the wheel rpm development, which is produced by an automotive tyre having a specially created emergency running surface.

3. Method according to claim 2, **characterised in that** the emergency running surface has, on the surface, cavities which, during the travelling movement on the emergency surface on a roadway, produce an oscillation, which is characteristic for the emergency running state and is detectable by means of wheel rpm sensors.

4. Method according to claim 1, **characterised in that** at least one of the partial methods is a fourth partial method (Prog V) which is suitable for detecting the pressure loss in run-flat wheels having an emergency running surface disposed internally of the tyre casing, whereby a pressure loss is detected when the angular speed drops or respectively the dynamic travel radius of one or more wheels increases compared with a starting value of the wheel in question after a pressure loss, when the pressure loss is so great that the run-flat tyre travels substantially on the emergency running surface.

5. Method according to claim 1, **characterised in that** a first partial method (Prog A) is provided with a response for a high pressure loss, **in that** a second partial method (Prog B) is provided with a response for a lower pressure loss, and a third and/or fourth partial method (Prog S, Prog V) are or is provided, which partial method is accomplished in a parallel manner or respectively in a quasi parallel manner and responds

   - when, in the case of a vehicle tyre having a specially created emergency running surface, a speed pattern is detected which is characteristic for a pressure loss in a tyre, and/or
   - when, in the case of a run-flat tyre, the angular speed or the dynamic travel radius of one or more wheels has dropped compared with a starting value of the wheel in question after a pressure loss.

6. Method according to at least one of claims 1 - 5, **characterised in that** the method of measuring the pressure of vehicle tyres is accomplished within a method of regulating the braking force and/or the travel dynamics (ABS, ASR, ESP).

7. Method according to at least one of claims 1 to 6, **characterised in that** the reference parameter $Ref_i$ is formed when the sums of two respective signals, representing the wheel rpms, are divided.

8. Method according to at least one of claims 1 to 7, **characterised in that** the outputs of the partial methods, which contain information concerning a pressure loss, are combined to form a common output OR.

9. Method according to claim 4, **characterised in that** a pressure loss in a tyre is only detected when the angular speed or respectively the dynamic travel radius of the wheel in question has increased by more than a prescribed threshold value.

10. Apparatus for controlling the braking force and/or the travel dynamics and for detecting a pressure loss in tyres of an automotive vehicle, **characterised in that** a microcomputer, which is connected to wheel rpm sensors and possibly to additional travel dynamic sensors, accomplishes a method according to at least one of claims 1 - 9 and a method, which is known per se, of regulating the braking force and/or travel dynamics.

## Revendications

1. Procédé pour identifier une perte de pression de pneumatiques d'un véhicule automobile pendant le déplacement, notamment pour détecter la réduction de ladite pression au-dessous d'une valeur de seuil pouvant être définie, par évaluation de vitesses angulaires, déterminées par des capteurs, des roues du véhicule automobile ou par évaluation d'informations, qui indiquent les vitesses angulaires sur la base d'intervalles de temps, selon lequel la procédé d'identification d'une perte de pression comprend deux ou plusieurs procédés partiels (Prog A, Prog B, Prog S, Prog V), qui représentent chacun pour soi un procédé, apte à être exécuté séparément, pour la mesure de la pression dans un pneumatique de véhicule automobile ou pour détecter une pression critique de pneumatique, les étapes des procédés partiels étant exécutées en parallèle ou d'une manière générale quasiment en parallèle, et deux procédés partiels conduisant, à partir des vitesses angulaires ou des informations, qui indiquent des vitesses angulaires sur la base d'intervalles de temps, une ou plusieurs grandeurs de référence $Ref_i$, et vérifient la ou les grandeurs de référence pour déterminer si les valeurs limites supérieure et inférieure $G_1$, $G_2$ sont alors supérieures, **caractérisé en ce que** le second procédé partiel (Prog B) possède des valeurs limites $^BG_1$ et $^BG_2$, qui définissent une gamme plus étroite que les valeurs limites $^AG_1$ et $^AG_2$ du premier procédé partiel (Prog A) de sorte que l'on a $^BG_1 < {}^AG_2$ et $^BG_2 > {}^AG_2$.

2. Procédé selon la revendication 1, **caractérisé en ce qu'**au moins l'un des procédés partiels est un troisième procédé partiel (Prog S) qui identifie un modèle de vitesse de la variation de la vitesse de rotation de roue, qui est produit par un pneumatique du véhicule présentant une surface de roulement de secours créée spécialement.

3. Procédé selon la revendication 2, **caractérisé en ce que** la surface de roulement de secours possède, au niveau de la surface, des cavités qui, pendant le roulement sur la surface de roulement de secours sur une chaussée, produisent une vibration qui est caractéristique de l'état de roulement de secours et peut être identifiée à l'aide de capteurs de vitesses de rotation de roues.

4. Procédé selon la revendication 1, **caractérisé en ce qu'**au moins l'un des procédés partiels est un quatrième procédé partiel (Prog V), qui convient pour l'identification de la perte de pression de roues à plat possédant une surface de roulement de secours disposée à l'intérieur de l'enveloppe du pneumatique, par le fait qu'une perte de pression est identifiée au fait que la vitesse angulaire diminue ou le rayon de roulement dynamique d'une ou de plusieurs roues augmente par rapport à une valeur de départ de la roue considérée après une perte de pression, lorsque la perte de pression est suffisamment élevée pour que le pneumatique à plat roule essentiellement sur la surface de roulement de secours.

5. Procédé selon la revendication 1, **caractérisé en ce qu'**il est prévu un premier procédé partiel (Prog A) présentant une réponse dans le cas d'une perte de pression élevée, qu'il est prévu un second procédé partiel (Prog B) présentant une réponse dans le cas d'une perte de pression plus faible et qu'il est prévu un troisième et/ou un quatrième procédés partiels exécutés en parallèle ou quasiment en parallèle (Prog S, Prog V), qui répond

- lorsque, dans le cas d'un pneumatique de véhicule comportant une surface de roulement de secours créée spécialement, un modèle de vitesse qui est caractéristique d'une perte de pression du pneumatique, est identifié et/ou
- lorsque, dans le cas d'un pneumatique à plat, la vitesse angulaire ou le rayon de roulement dynamique d'une ou de plusieurs roues a diminué par rapport à une valeur initiale de la roue considérée après une perte de pression.

6. Procédé selon au moins l'une des revendications 1 à 5, **caractérisé en ce que** le procédé pour mesurer la pression d'un pneumatique de véhicule est exécuté dans le cadre d'une procédure de régulation de la force de freinage et/ou de la dynamique de déplacement (ABS, ASR, ESP).

7. Procédé selon au moins l'une des revendications 1 à 6, **caractérisé en ce que** la grandeur de référence $Ref_i$ est formée par division des sommes respectivement de deux signaux représentatifs des vitesses de rotation de roues.

8. Procédé selon au moins l'une des revendications 1 à 7, **caractérisé en ce que** les signaux de sortie des procédés partiels, qui contiennent une information concernant une perte de pression, sont combinés selon la combinaison OU pour former une sortie commune.

9. Procédé selon la revendication 4, **caractérisé en ce qu'**on identifie pour la première fois une perte de pression du pneumatique lorsque la vitesse angulaire ou le rayon de roulement dynamique de la roue considérée a augmenté de plus d'une valeur de seuil prédéterminée.

10. Dispositif pour commander la force de freinage et/ou la dynamique de déplacement et pour identifier une perte de pression dans des pneumatiques d'un véhicule, **caractérisé en ce qu'**un micro-ordinateur, qui est relié à des capteurs de vitesses de rotation de roues et éventuellement à des capteurs supplémentaires de la dynamique de déplacement, exécutent un procédé selon au moins l'une des revendications 1 à 9, et un procédé connu en soi pour la régulation de la force de freinage et/ou de la dynamique de déplacement.

EP 1 240 038 B1

Fig. 1

Fig. 2a

Fig. 2b

Fig. 3

Fig. 4